(19) Europäisches Patentamt
European Patent Office
Office européen des brevets

(11) Publication number: 0 391 343 A2

# (12) EUROPEAN PATENT APPLICATION

(21) Application number: 90106357.8

(22) Date of filing: 03.04.90

(51) Int. Cl.[5]: C08F 220/12, D21H 17/37

(30) Priority: 05.04.89 US 333376

(43) Date of publication of application: 10.10.90 Bulletin 90/41

(84) Designated Contracting States: AT BE CH DE DK ES FR GB GR IT LI LU NL SE

(71) Applicant: The B.F. Goodrich Company
3925 Embassy Parkway
Akron Ohio 44313(US)

(72) Inventor: Shah, Pravin Kantilal
29933 Sycamore Oval
Westlake, Ohio 44145(US)
Inventor: Blam, Arnold Friedrich
7289 Barton Hill Drive
Parma, Ohio 44129(US)
Inventor: Yang, Philip Yung-Chin
401 Hurst Drive
Bay Village, Ohio 44140(US)

(74) Representative: von Kreisler, Alek, Dipl.-Chem. et al
Patentanwälte Von Kreisler-Selting-Werner
Deichmannhaus am Hauptbahnhof
D-5000 Köln 1(DE)

## (54) Very fine-sized aqueous polymeric microemulsions.

(57) Aqueous polymeric microemulsions such as acrylic ester copolymers contain very fine particles having a number average particle size of generally 600 Angstroms or less. The glass transition temperature of the particles is low and with respect to acrylic polymers is generally 20°C or lower. The aqueous polymeric microemulsion can can be based on polymers such as an acrylic polymer or copolymers thereof, vinylidene chloride polymers or copolymers, acrylonitrile-butadiene (nitrile) polymers or copolymers thereof, polyvinyl chloride polymers or copolymers, vinyl acetate polymers or copolymers, ethylene copolymers, and the like, as well as blends of the above. The polymeric microemulsions are made by utilizing at least one water soluble initiator or a redox initiator system and a low but effective amount of one or more emulsifying agents and adding the monomers thereto on an incremental basis. Acrylic polymeric microemulsions are desired due to their high heat stability. The fine-size polymeric microemulsions have good film formation, high pigment loading ability, unexpectedly high shear holding time, and the like. They are thus suitable for imparting improved strength to paper and when used with various fillers improve the opacity of the paper.

EP 0 391 343 A2

# VERY FINE-SIZED AQUEOUS POLYMERIC MICROEMULSIONS

## FIELD OF THE INVENTION

The present invention relates to extremely fine-sized aqueous polymeric microemulsions, and especially acrylic microemulsions. More specifically, the aqueous polymeric microemulsions of the present invention are made by incremental addition of monomers to a reactor utilizing at least one water soluble initiator or redox initiation system and a low amount of one or more emulsifiers such that the weight ratio of emulsifiers to monomers is less than one.

## BACKGROUND

Heretofore, numerous emulsion latexes have existed. However, the particle sizes of such latexes have generally been large, for example 1,500 angstroms, i.e. A, or larger.

U S. Patent No. 4,177,177 to Vanderhoff et al relates to various methods for making polymeric emulsions which can be utilized to produce latexes. The latexes generally have a particle size greater than 1,000 angstroms.

U.S. Patent No. 4,228,047 to Pippin et al relates to an aqueous coating composition comprising a copolymer of at least 95 percent by weight of vinyl acetate and at least 0.1 percent by weight of maleic anhydride which allegedly has been found to have improved starch binder compatibility.

An anonymous disclosure relates to an aqueous synthetic polymer latex having a multimodal particle size distribution which is prepared by the use of intermediate additions of a small amount of relatively small polymer particles (e.g. conventional "seed" latex) during the course of an otherwise conventional emulsion polymerization process.

Japanese Disclosure No. 52103588 to Asahi Dow relates to a carpet-backing composition containing 100 parts by weight (as solid content) of a copolymer latex, 200 to 350 parts by weight of inorganic filler and thickener consisting of 30 to 60 weight percent of a) butadiene; 20 to 70 weight percent of b) styrene; 5 to 30 weight percent of c) methyl methacrylate; and 1 to 5 weight percent of d) ethylene series of unsaturated, carboxylic acid and has an average particle size of 600 to 1,200 A. By using the latex of small particle diameter for the carpet backing, blistering is prevented.

Belgian Patent No. 812139 to DeSoto, Inc. relates to opaque coatings obtained from a latex comprising an aqueous suspension of small and large resin particles, the large particles having a Tg less than the small ones and having an average diameter which is greater than twice that of the small particles, the latter forming 20 to 65 weight percent of the total particles. The particles are such that neither the large nor the small ones can, on their own, coalesce when the latex is dried, to form a non-cellular film, like small particles actually giving a powder under such conditions. The small particles are preferably polystyrene and the large ones a copolymer of vinyl acetate and an ester of a 4 to 18 carbon atom alkanol and an unsaturated carboxylic acid. The composition contains a minimum amount of solvent and rapidly gives an opaque coating of low porosity upon drying. It may be used for lipstick, crayon, etc.

Russian Patent No. 329,187 to Smirnova Ronzhina relates to coarsely dispersed stable PVC latices made by polymerizing vinyl chloride in the presence of an initiator such as ammonium persulphate and ionogenic emulsi fiers, e.g. 0.5 to 1.5 percent Na salt of the ethyl ester of maleoprimaric acid, preferably in the presence of 10 percent on the vinyl chloride, of seeding emulsion of PVC, with a particle size of 0.5 micron.

British Patent No. 1,100,569 to The Dow Chemical Co. relates to acrylic polymer latexes containing large and small particles prepared by 1) heating water containing a soluble catalyst to up to 85 °C in an inert atmosphere, 2) adding 1/3 of a mixture of monomers, 3) carrying on the polymerization for at least 15 minutes, 4) adding an aqueous solution of an anionic emulsifier and an aqueous solution of the polymerization catalyst, and 5) adding the remaining monomer continuously over a period of at least 45 minutes.

U.S. Patent No. 3,711,435 to DuPont and Co. relates to a stable, aqueous, colloidal dispersion prepared by mixing 1) a copolymer of 20 to 80 weight percent ethylene and 80 to 20 weight percent of an aminoalkylacrylate of formula where R is H or methyl; $R^1$ and $R^2$ are H or 1 to 4 carbon alkyl, and n is 4; 2) an acid having a dissociation constant of 10 to 5; and 3) water in proportions to give a solids containing 5 to 30 weight percent and a degree of neutralization of the amino groups of the polymer of at least 40 percent;

mixing being effected at a temperature suitable for dispersing the polymer in particles of size less than 0.1 micron. Resulting dispersions have very small particle size so that they may be thinly spread over aluminum substrates to give void-free coatings. Also suitable for coating cellulosic substrates, and as flocculants for removal of suspended matter from water. N,N-dimethylaminoethylmethacrylate is a suitable comonomer.

Japanese Disclosure No. 52123478 to Kuraray relates to compositions prepared by emulsion polymerization of unsaturated monomers in the presence of protective colloid which is prepared by cleaving water-solubilized copolymers in the presence of free radical and by heating. The compound contains units of maleinimide and/or N substituted maleinimide and units of alpha-olefin as essential components of the main chain.

An article by Ugelstad, El-Aasser, and Vanderhoff, Journal of Polymer Science, Polymer Letter Edition, 11, 503; 1973 relates to the production of latex particles of from 2,000 to 4,000 angstroms by miniemulsion polymerization of a mix-emulsifier system including a surfactant and a long-chain alcohol or alkane cosurfactant utilizing ultrasonification.

An article by Atik and Thomas, Journal of American Chemical Society, 103, 4279; 1981 relates to aqueous styrene polymer microemulsions made by bulk polymerization having a number average particle size of from about 200 to about 350 angstroms was produced utilizing a mix-emulsifier of cetyltrimethylammonium bromide and hexanol followed by polymerization with an oil-soluble azobisisobutyronitrile and irradiation. However, the amount of solids content was very low, less than 2 percent and the amount of emulsifiers utilized was approximately 1.5 times the amount of polymer by weight.

An article by Jayakrishnan and Shah, Journal of Polymer Science, Polymer Letters, 22, 31; 1984 relates to a bulk polymerization of polystyrene or methylmethacrylate microemulsion particles having a number average size of from about 100 to about 600 angstroms utilizing sodium dihexyl sulfosuccinate and ethylene oxide-propylene oxide block copolymers as mix-emulsifiers in an oil-soluble initiator such as benzoyl peroxide. However, the weight ratio of the emulsifier to the monomer was approximately one to one, the microemulsion was not stable in that water would coagulate it and hence could not be diluted with water.

## SUMMARY OF THE INVENTION

According to the present invention, exceedingly small-sized polymeric microemulsion particles are produced. An important aspect of the present invention to achieve polymeric microemulsion particles is that the monomers are added on an incremental basis over a period of time utilizing at least one water soluble initiator or redox initiation system and a low level of one or more emulsifiers such that the ratio thereof to monomer by weight is generally less than one. The polymeric microemulsion so produced has a high solids content, and is coagulation stable and thus can be diluted with water unlike prior art polymeric microemulsions. Microemulsion polymer particles are produced generally having an average particle size of 600 A or less and even less than 500 A. The various polymeric microemulsion particles have various physical attributes such as: good film formation, high pigment loading ability, and the like and can be utilized in the manufacture of paper where they serve as effective binders, both with regard to cellulosic or synthetic fibers, and mineral fillers and pigments such as clays, talcs, $CaCO_3$, $TiO_2$, $ZnO_2$, carbon black, silicas, and the like, and result in improved opacity as well as impart improved strength. Inasmuch as color retention of the substrate is important, and since acrylic polymeric microemulsions have good heat and light stability, they are generally desired. A highly unexpected result was that even though the acrylic polymeric microemulsion particles were generally not tacky, they nevertheless exhibited vastly improved binding strength and static shear holding time in comparison with much larger particle size acrylic latex polymers of similar molecular weight.

## DETAILED DESCRIPTION OF THE INVENTION

Various very fine particle sized microemulsions, hereinafter referred to as aqueous polymeric microemulsion particles, are produced such as polyacrylic esters or copolymers thereof where copolymers means two or more dissimilar monomers polymerized together, polyvinylidene chloride or copolymers, polyacrylonitrile-butadiene or copolymers, copolymers of polyvinyl chloride, polyvinyl acetate or copolymers, or ethylene copolymers thereof. Blends of the above fine-sized particle latexes can also be

utilized. The monomers or starting compounds utilized to make such aqueous polymeric microemulsion particles are well known to the art and to the literature, for example, as set forth in Encyclopedia Of Chemical Technology, Kirk-Othmer, John Wiley & Sons, Vol. 14, pp 82-97, (1981) which is hereby fully incorporated by reference.

Considering the polyvinylidene chloride copolymers, they are generally polymers wherein the comonomers are vinyl chloride and an acrylate wherein the ester portion is an aliphatic, desirably an alkyl, having from 1 to 20 carbon atoms, or a nitrile monomer such as acrylonitrile.

Polyacrylonitrile-butadiene (nitrile latex) is made from acrylonitrile and a conjugated diene such as butadiene.

The polyvinyl chloride copolymers include comonomers such as an ester of acrylic acid wherein the ester portion has from 1 to 12 carbon atoms, for example, methyl acrylate, ethyl acrylate, butyl acrylate, octyl acrylate, cyanoethyl acrylate, and the like; vinyl acetate; esters of methacrylic acid wherein the ester portion has from 1 to 12 carbon atoms, such as methyl methacrylate, ethyl methacrylate, butyl methacrylate, and the like; and combinations thereof as well as other vinyl comonomers copolymerizable therewith known to the art and to the literature.

The microemulsion produced polyvinyl acetates are generally copolymers of vinyl acetate and an alkyl acrylate wherein the alkyl ester portion contains from about 1 to about 12 carbon atoms with 2 to 4 carbon atoms generally being preferred or ethylene. Desirably, the vinyl acetate copolymer has a glass transition temperature of plus 20° C or less.

The ethylene copolymer microemulsion particles are made from ethylene and comonomers thereof. A suitable type of comonomer is vinyl acetate, and the like.

Particularly desired aqueous polymeric microemulsion particles are the acrylic polymers. The acrylic microemulsion polymers of the present invention are made from one or more acrylate monomers having the formula

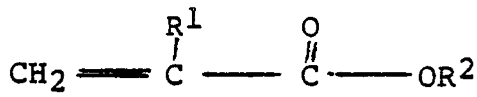

where $R^1$ is preferably hydrogen, or an alkyl having from 1 to 4 carbon atoms with methyl being preferred, a halogen, or a cyano group. $R^2$ can be an aliphatic and preferably an alkyl having from 1 to 20 carbon atoms. Inasmuch as a larger ester group would tend to give a lower Tg and render a softer or more tacky acrylic polymeric microemulsion polymer, larger ester groups are generally preferred such as alkyls having from 4 to 12 carbon atoms and preferably from 4 to 8 carbon atoms. Often, more than one acrylate monomer is used to form an acrylate copolymer. Examples of suitable acrylic polymers are those made from n-butyl acrylate or 2-ethyl hexyl acrylate, ethyl acrylate. The total amount of the one or more acrylate monomers is generally from about 30 percent to about 99 or 100 percent by weight based upon the total weight of all of the acrylic polymeric micro emulsion forming monomers, desirably from about 60 to about 99 percent, and preferably from about 70 to about 98 percent by weight. It is an important aspect that the glass transition temperature, i.e., Tg of the acrylate rubber polymers be they homopolymer or copolymer, as made from various comonomers set forth hereinbelow, have a low Tg such as plus 20° C or lower.

One or more suitable copolymerizable vinyl monomer such as vinyl chloride, styrene, vinylidene chloride, vinyl acetate, acrylonitrile, and the like, copolymerized to produce a Tg of 20° C or lower, can optionally be utilized.

Although optional, desirably at least one olefinically unsaturated carboxylic acid monomer containing at least one carbon-carbon double bond susceptible to polymerization and at least one carboxylic group are utilized. Such acids encompass generally monocarboxylic as well as dicarboxylic acids. More specifically, acids with a double bond at the alpha-beta position with respect to the carboxyl group such as

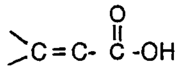

or with a terminal methylene group such as

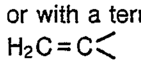

are desired since they are readily available and generally easily polymerized. Examples of suitable olefinically unsaturated carboxylic acid monomers include acrylic acid, methacrylic acid, ethacrylic acid, alpha-chloroacrylic acid, alpha-cyanoacrylic acid, crotonic acid, beta-acryloxy propionic acid, hydrosorbic acid, sorbic acid, alpha-chlorosorbic acid, cinnamic acid, beta-styryl acrylic acid, hydromusonic acid, muconic acid, glutonic acid, aconitic acid, itaconic acid, fumaric acid, maleic acid, and the like, with acrylic acid, methacrylic acid, itaconic acid, maleic acid, and fumaric acid generally being preferred. The amount of

the olefinically unsaturated carboxylic acid monomer, when utilized, is from about 0.2 to about 15 percent by weight, desirably from about 2 percent to about 6 percent by weight, and preferably from about 3 percent to about 5 percent by weight based upon the total weight of all monomers.

An optional, yet desirable, crosslinking agent are generally monofunctional compounds such as N-alkylol amides of the formula

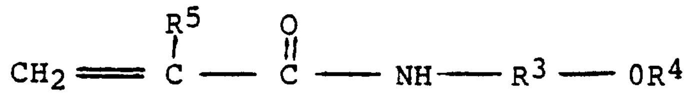

where $R^3$ is an alkyl having from 1 to 10 carbon atoms and preferably from 1 to 4 carbon atoms, and $R^4$ is hydrogen or an alkyl having from 1 to 10 carbon atoms and desirably from 1 to 4 carbon atoms. $R^5$ is preferably hydrogen but can be an alkyl having from 1 to 4 carbon atoms with methyl being preferred. Examples of suitable crosslinking agents include N-methylol acrylamide, N-ethanol acrylamide, N-propanol acrylamide, N-methylol methacrylamide, N-ethanol methacrylamide, N-methylol maleimide, N-ethylol maleamide, N-methylol maleamic acid, N-methylol maleamic acid esters, the N-alkylol amides of the vinyl aromatic acids such as N-methylol-p-vinyl benzamide, and the like. Examples of still another compound is N-(isobutoxymethyl) acrylamide.

Various difunctional compounds or monomers can also be utilized as effective crosslinking agents such as compounds containing two olefinic groups such as divinyl benzene, divinyl naphthalene, divinyl cyclohexane, and the like, various diacrylate or dimethacrylate esters of aliphatic diols wherein the ester portion has from 1 to 10 carbon atoms and desirably is an alkyl and wherein the diol portion has from 2 to 8 carbon atoms and is desirably an alkyl such as ethylene glycol dimethacrylate, diethylene glycol diacrylate, diethylene glycol dimethacrylate, butylene glycol diacrylate, and the like. Such crosslinking agents are further described in the Journal Of Applied Polymer Science, Vol. 34, pp 2389-2397 (1987) John Wiley & Sons, Inc., in an article "New Crosslinking Agents for Vinyl Polymers" which is hereby fully incorporated by reference.

The amount of the crosslinking agent when utilized is generally from about 0.05 to about 10 percent by weight, desirably from about 0.1 to about 5 percent by weight, and preferably from about 0.1 to about 1.0 percent by weight based upon the total weight of all monomers.

It is an important aspect of the present invention that the polymers or copolymers have a low Tg in order that they are generally soft. Acrylic compositions also ensure that the polymers maintain thermal stability at elevated temperatures and are generally non-discoloring, that is typically do not turn color (e.g., brown or yellow) upon aging or heating. High whiteness of the acrylate polymers are thus maintained. The Tg can generally be plus 20°C or lower, desirably minus 5°C or lower, preferably minus 20°C or lower, and more preferably minus 30°C or lower. Such a low Tg can be obtained by varying the various components or monomers which form the polymeric microemulsions such as by utilizing one or more acrylate monomers which has a large ester group.

Regardless of the particular type of aqueous microemulsion polymers utilized as set forth above, or the various copolymers or derivatives thereof, or blends of the various types of polymers, the polymer particle size is very small. By the term "particle size" it is meant the number average medium particle size as measured by photon correlation spectroscopy, e.g., a model BI-90 instrument made by Brookhaven Instruments Corporation. Polymeric microemulsion particles produced according to the present invention have a very small number average particle size as 600 A or less, generally 500 A or less, generally 400 A or less, or 350 A or less, or even 300 A or less. The polymeric microemulsion particle size can desirably range from about 50 to about 600 A or preferably from about 200 to about 500 A. Generally, any of the above ranges can be utilized depending upon the specific end properties desired.

The aqueous microemulsion polymer particles of the present invention are achieved by generally utilizing an incremental metered (semicontinuous) microemulsion polymerization process. That is, the polymerization monomers are added by way of an extended addition to the reaction vessel over a period of time as opposed to a lump sum addition or addition step-wise of a relatively small number of charges. In essence, a non-bulk or non-batch type polymerization is conducted. By the term "incremental addition" it is meant any form of addition of a small amount of the total monomer to be added to an aqueous solution containing one or more emulsifiers and at least one water soluble initiator or redox initiation system (discussed hereinbelow) over an extended period of time until all of the monomer has been added. Thus, included within the present invention are various cyclic additions, interrupted additions, addition of initially a specific rate of monomer, combinations of the above, and the like. Preferably, the addition of the monomer is continuous and at a generally constant level over a period of time to maintain an effective or suitable

reaction temperature control during polymerization.

The polymerization of the present invention occurs by adding the monomer(s) into an aqueous solution of one or more emulsifiers and at least one water soluble initiator or redox initiation system. The emulsifiers are generally surfactants and hence can be cationic, nonionic, anionic, and the like, with anionic generally being desired. Generally, the type of emulsifiers utilized are those which can be utilized in conventional latex polymerization and such are known to the art as well as to the literature. Examples of numerous types of such emulsifiers are set forth in McCutcheons, "Detergents and Emulsifiers," 1978, North American Edition, Published by McCutcheon's Division, MC Publishing Corp., Glen Rock, New Jersey, U.S.A., as well as the various subsequent editions thereof, all of which are hereby fully incorporated by reference. Useful anionic emulsifiers include alkali metal or ammonium salts of the sulfates of alcohols having from 8 to 18 carbon atoms such as sodium lauryl sulfate; sodium stearyl sulfate, ethanolamine lauryl sulfate, ethylamine lauryl sulfate; alkali metal and ammonium salts of sulfonated petroleum and paraffin oils; sodium salts of aromatic sulfonic acids such as dodecane-1-sulfonic acid and octadiene-1-sulfonic acid; aralkyl sulfonates such as sodium isopropyl benzene sulfonate, sodium dodecyl benzene sulfonate and sodium isobutyl naphthalene sulfonate; alkali metal and ammonium salts of sulfonate dicarboxylic acid esters such as sodium dioctyl sulfosuccinate, disodium-n-octadecyl sulfosuccinamate; alkali metal or ammonium salts of free acid of complex organic mono- and diphosphate esters; and the like. Nonionic emulsifiers such as octyl- or nonylphenyl polyethoxyethanol can also be used. Aqueous polymeric microemulsions having excellent stability are obtained with the alkali metal and ammonium salts of aromatic sulfonic acids, aralkyl sulfonates and long chain alkyl sulfonates. Various phenyl type phosphates can also be utilized. Yet other anionic surfactants include various fatty acid salts having from 12 to 22 carbon atoms as well as various rosin acid salts wherein the salt portion is generally lithium, sodium, potassium, ammonium, magnesium, and the like. The selection of the anionic surfactant generally depends on the pH of the polymerization action. Hence, fatty acid salts and rosin acid salts are not utilized at low pH values.

Other suitable surfactants are the various disulfonated alkylated diphenyl oxide molecules having the formula:

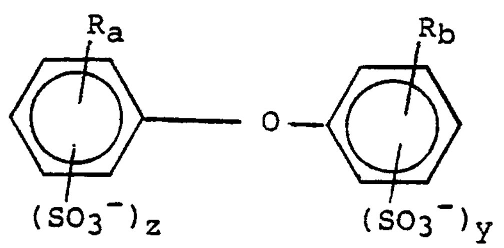

$Na^+_{(x+y)}$

wherein $R_a$ and $R_b$, independently, is an aliphatic, desirably an alkyl having from 1 to 20 carbon atoms, where a and b equal 0, 1 or 2; a + b equals 1 or 2; x and y equals 0 or 1; and x + y equals 1 or 2. Such surfactants are sold commercially under the tradename of Dowfax. A preferred such surfactant is a $C_{12}$ monoalkylated surfactant known as Dowfax 2A-1.

An important aspect of the present invention is to utilize a low emulsifier-to-monomer weight ratio, that is a low emulsifier level. Generally, the reaction is carried out in a reaction vessel containing water, the emulsifiers, and/or water soluble initiator(s) or part of a redox initiation system. If a preemulsified addition stream procedure is utilized, water, generally a small amount of the total amount of emulsifier, and a portion of a monomer can be premixed and then added to the reaction vessel containing a portion, but preferably a majority, of the emulsifier, and water. That is, to effectively produce aqueous microemulsion polymer particles within the desired size of the present invention, a majority of the emulsifier is desirably contained in the reaction vessel. Optionally, the reaction vessel can contain a small amount of monomer therein before commencement of the incremental polymerization. Such small amount of monomer is generally below 30 percent by weight and desirably about 10 percent by weight of the total monomer utilized. The amount of the one or more emulsifiers generally contained in the reaction vessel containing the initiator or redox initiation system is generally at least 50 or 60 percent by weight, desirably at least 70 percent by weight, more desirably at least 80 percent by weight, and preferably at least 90 percent by weight. However, the overall amount of the one or more emulsifiers utilized is relatively low. That is, the overall or total amount of the one or more emulsifiers utilized on a weight basis is less than 100 percent (i.e., a one-to-one weight ratio), desirably 50 percent or less, more desirably 25 percent or less, preferably 15 or 10 percent or less, and more preferably 8 percent or less of the total weight of the one or more monomers utilized to make the polymeric microemulsions of the present invention. The amount of the one or more emulsifiers utilized thus

generally ranges from about 0.5 to about 50 parts by weight, desirably from about 1.0 to about 25 parts by weight, more desirably from about 1.0 to about 15 parts by weight, preferably from about 1.0 to about 10 parts by weight and more preferably from about 1.0 to about 8 parts by weight for every 100 parts by weight of the total amount of the one or more monomers utilized to form the polymeric microemulsion. Polymerization can generally occur at ambient temperature as from about 10° or 20°C up to the boiling point of the aqueous solution as for example 100°C, but desirably occurs at elevated temperatures as from about 45°C to about 90°C and preferably from about 50°C to about 85°C. The reaction pressure is generally atmospheric or elevated.

Another important aspect of the present invention is that at least one water soluble initiator and/or a redox initiation system is utilized. Such water soluble initiators are known to the art as well as to the literature. Such initiators are generally free radical although other types of initiators can be utilized. Suitable types of an initiator are the various water soluble peroxides and hydroperoxides such as hydrogen peroxide, and the like. Other water soluble initiators include sodium, potassium and ammonium persulfates used by themselves or in an activated redox system. Typical redox initiation systems include alkali metal persulfates and/or organic peroxides in combination with a reducing substance such as sodium formaldehyde sulfoxylate, erythorbic acid, ascorbic acid, polyhydroxyphenols and oxidizable sulfur compounds such as sodium sulfite or sodium bisulfite, a reducing sugar, dimethylamino propionitrile, a diazomercapto compound, a water-soluble ferricyanide compound, or the like. The organic peroxides generally include cumene hydroperoxide, diisopropylbenzene hydroperoxide, p-menthane hydroperoxide, t-butyl hydroperoxide, and the like. Although such organic peroxides can be used by themselves, they are desirably used in combination with the above-noted reducing agents. Heavy metal ions can also be used to activate the polymerization. The redox initiation systems of the present invention generally containing an oxidizing substance as well as a reducing substance generally has one such substance which is water soluble.

Heretofore, to produce a greater number of particles and therefore smaller particles, generally higher amounts of initiators were desired inasmuch as they would initiate more polymers and given a fixed amount of monomer would yield smaller particles. However, it has been unexpectedly found that high amounts of water soluble initiators or redox initiation systems are not suitable inasmuch as small particle size and good color (i.e., free of discoloration) are not produced. The amount of at least one or more water soluble initiators or redox initiation system utilized generally range from about 0.01 to about 3 parts by weight, desirably from about 0.025 to about 2 parts by weight, and preferably from about 0.025 to about 0.5 parts by weight for every 100 parts by weight of total monomers utilized to form the polymeric microemulsions of the present invention.

The initiators or the redox initiation system are generally added to a heated aqueous solution containing a majority amount of the one or more emulsifiers therein. A majority amount of the polymerizable forming monomers is then added to the reaction vessel as on an incremental basis until the total amount of monomer has been added. That is, as noted above, the monomer is generally metered in over a period of time and not all added at once or in a few additions. The rate of the monomer addition is generally governed by various factors such as reaction vessel size, exothermic reaction temperature increase, cooling capacity of the reaction vessel, and the like, such that the reaction temperature is generally maintained a specific value or range. The reaction desirably takes place in an inert atmosphere such as nitrogen and is generally continued until a high conversion is achieved as in excess of 80 percent, desirably at least 90 or 95 percent, and preferably at least 98 percent or even complete conversion.

The above process yields a polymeric microemulsion which is coagulation stable inasmuch as it can be diluted with water without coagulation occurring. The solids content of the microemulsion is relatively high as from about 5 percent to about 55 percent by weight, desirably from about 15 to about 45 percent by weight, and preferably from about 30 to about 42 percent by weight based upon the total weight of the aqueous polymeric microemulsion.

The polymeric microemulsions of the present invention, due to their extremely fine size, are useful in many applications such as pigment binding, adhesives, binders for clay coatings, nonwoven saturations, textile coatings, beater addition polymers, as binders for paint, as binders for paper products, and the like. Moreover, they have been found to result in unexpected properties. For example, while tack of the polymeric microemulsion particles is greatly reduced, the binding strength, for example as measured by static shear holding time, is dramatically increased as was the beater addition tensile strength in paper.

The invention will be better understood by reference to the following examples.

## Example 1

An aqueous polymeric microemulsion of n-butyl acrylate and acrylamide was prepared as follows: 99 parts per hundred monomer (PHM) n-butyl acrylate and 1 PHM of acrylamide were mixed and emulsified in 35 PHM water containing 0.5 PHM alkylated diphenyl oxide disulfonate (DOWFAX 2A-1). This monomer emulsion was metered evenly over 3 hours into a 5-liter glass reaction which contained 100 PHM water, 4 PHM of Dowfax 2A-1 and 0.2 PHM of water soluble initiator (ammonium persulfate). The reactor was kept at 80° C, constantly stirred, and purged with nitrogen. At the end of monomer addition, the reactor was kept at 80° C for another 1.5 hours with additional 0.06 PHM ammonium persulfate added to carry the reaction to more than 95 percent and preferably to complete conversion of monomer. The reaction was then brought to almost complete conversion by chasing the reaction with a redox initiation system such as described above. This charge resulted in an aqueous polymeric emulsion containing 41 percent total solids. The number medium particle size measured by photon correlation spectroscopy (Brookhaven Instruments Corporation, Model BI-90) is 270 A, with an effective hydrodynamic diameter of 520 A and a polydispersity of 0.124. This polymeric microemulsion is translucent due to the small particle size of the polymer particle, different from conventional latexes which are turbid white in appearance.

## Example 2

An aqueous polymeric microemulsion of n-butyl acrylate and n-methylolacrylamide (a crosslinkable monomer) was prepared using the same method as in Example 1, except acrylamide was replaced by n-methylolacrylamide, and alkylated diphenyl oxide disulfonate was replaced by sodium lauryl sulfate. A translucent polymeric microemulsion was obtained with a number medium particle size of 200 A in diameter, and an effective hydrodynamic diameter of 540 A and a polydispersity of 0.2.

## Example 3

An aqueous polymeric microemulsion of n-butyl acrylate, 3-methyl-3-buten-1-ol (a polymerizable emulsifier) and methacrylic acid was prepared using the same method in Example 1. The composition in the monomer emulsion is n-butyl acrylate 95 PHM, 3-methyl-3-buten-1-ol 3 PHM and methyacrylic acid 2 PHM. This yielded a translucent polymeric microemulsion with a number medium diameter of 350 A, and an effective hydrodynamic diameter of 560 A and a polydispersity of 0.087.

As apparent from the above Examples, aqueous polymeric microemulsions were produced generally having a number average particle size of 600 A or smaller.

## Example 4

An aqueous polymeric microemulsion of n-butyl acrylate, acrylic acid, and n-methylol acrylamide was prepared using the same method as in Example 1. The composition in the monomer emulsion is n-butyl acrylate 94.5 PHM, acrylic acid 4.5 PHM, and n-methylol acrylamide 1 PHM, which were mixed and emulsified in 36 PHM water containing 0.1 PHM Dowfax 2A-1. The reactor contained 84 PHM water 5 PHM Dowfax 2A-1, 10 percent of pre-emulsified monomer emulsion. The reaction was initiated at 55° C with redox initiation system consisting of 0.15 PHM ter-butyl hydroperoxide and 0.1 PHM sodium formaldehyde sulfoxylate. The reactor temperature was raised to 70° C, and the remaining pre-emulsified monomer mix was metered evenly into the reactor for 2.5 hours. Additional 0.2 PHM ter-butyl hydroperoxide and 0.08 PHM sodium formaldehyde sulfoxylate was added during the reaction to carry the reaction to nearly completion. The resulted polymeric microemulsion has a number medium average particle size of 430 A, and an effective hydrodynamic diameter of 840 A, and a polydispersity of 0.131. The total solids of the resulting polymeric microemulsion was 40.3 percent.

## Example 5

A conventional acrylic latex (Control A) and an aqueous polymeric microemulsion described in Example 4 were tested for adhesive strength. Control A has the same monomer composition as Example 4. It was made by conventional technique which has a number medium average particle diameter of 1520 A, an effective hydrodynamic diameter of 2270 A, and a polydispersity of 0.076. The total solids of Control A is 50.1 percent.

The conventional latex and the polymeric microemulsion of the present invention were tested with regard to various adhesion tests. The results were as follows:

TABLE I

| | Control A | Example 4 |
|---|---|---|
| Static Shear Holding Time (P.S.T.C. #7*) | | |
| Tested at Room Temperature, hours | 8.5 | > 24 |
| Tested at 120° F, hours | 6.2 | > 24 |
| Williams Plasticity | 4.5-5.0 | 4.5-5.0 |
| Tack Tests | | |
| Rolling Ball Tack, inches (P.S.T.C. #7) | 2.4 | > 10 |
| Polyken Tack (initial), g/cm$^2$ | 405 | 50 |
| Finger Tack | Medium | Low |

*P.S.T.C. - Pressure Sensitive Tape Council, 8th Edition, 1985

As apparent from above, the small particles of the present invention unexpectedly produce much higher static shear holding times at room temperature and at 120° F compared to the conventional large particle size acrylic latexes. This result was completely unexpected and shows the exceptional holding power of an adhesive or binder of very small particle size.

Although the Williams Plasticity and monomer composition is the same for both polymers, the adhesive strength of the polymeric microemulsion is far superior. Williams Plasticity is a test of adhesive flow and can be an indication of molecular weight.

The small particles of the present invention unexpectedly produce much lower tack than the conventional larger size acrylic latex. This was completely unexpected inasmuch as smaller particles generally yield improved tack.

The unexpected and greatly improved result of high static shear strength means that polymeric microemulsions holding power could be taken advantage of in many binding applications, i.e., binders for synthetic and natural fibers, binders for mineral fillers and pigments, binders for coatings on paper and textiles, adhesives, and beater addition polymers.

## Example 6

Tensile strength of sheets of paper made using a conventional beater addition process was tested for both Examples 4 and Control B.

Control B has the same monomer composition as Example 4. It was made by conventional technique which has a number medium average particle diameter of 1270 B, an effective hydrodynamic diameter of 1810 A, and a polydispersity of 0.067.

The paper sheets were made using 90 parts of pulp fiber and 10 parts of clay slurry. About 2.0 parts (based on 100 parts of fiber and clay) of Control B or Example 4 polymer microemulsion were added to a mix of fiber and clay to form paper sheets to compare physical properties. Paper sheets were then dried on a steam can drier at 210° F for 90 seconds. The paper sheets were then cured at 300° F for 3 minutes. Four 1x3 inch samples were cut from the sheets and tested. Crosshead speed was 5 inches/minute and the gauge separation were 2 inches.

The following results were obtained in regard to the tensile strength on beater addition sheets:

| Beater Addition Tensile | | |
|---|---|---|
| | Tensile Strength | Breaking Length |
| | (lbs.) | (meters) |
| Example 4<br>Control B | 20.2<br>17.0 | 4274<br>3812 |

As apparent from the above data, improved tensile strength was obtained utilizing polymeric microemulsion of the present invention in paper sheets described above.

The amount of the acrylic polymeric microemulsion particles utilized in paper applications generally varied from about 0.5 parts to about 20 parts by weight and preferably from about 0.5 parts to about 5 parts by weight for every 100 total parts by weight of paper, mineral fillers, and pigments.

While in accordance with the Patent Statutes, the best mode and preferred embodiment has been set forth, the scope of the invention is not limited thereto, but rather by the scope of the attached claims.

## Claims

1. An aqueous acrylic polymeric microemulsion, comprising:
a water coagulation stable acrylic polymeric microemulsion having a number average particle size of 600 Angstroms or less, said acrylic polymeric microemulsion particles having a Tg of 20°C or less,
said acrylic polymeric microemulsion made from:

1) one or more acrylate monomers having the formula

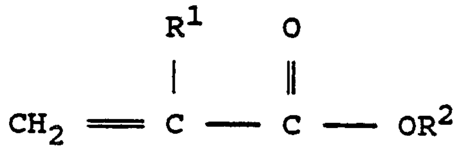

wherein $R^1$ is hydrogen or an alkyl having from 1 to 4 carbon atoms, wherein $R^2$ is an aliphatic having from 1 to 20 carbon atoms, wherein the amount of said 1 or more acrylate monomers is from about 30 percent to about 100 percent by weight based upon the total weight of all acrylic latex forming monomers,

2) optionally one or more other suitable copolymerizable vinyl monomer such as vinyl chloride, styrene, vinylidene chloride, vinyl acetate, acrylonitrile, and the like, copolymerized to produce a Tg of 20°C or lower,

3) optionally at least one olefinically unsaturated carboxylic acid monomer containing at least one carbon-carbon double bond susceptible to polymerization and at least one carboxyl group, the amount of said olefinically unsaturated carboxylic acid monomer when by weight based upon the total weight of all acrylic latex forming monomers, and

4) at least one optional monofunctional or difunctional crosslinking agent, said monofunctional crosslinking agent having the formula

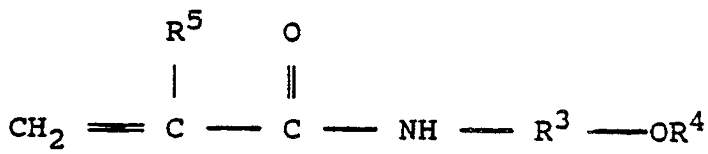

where $R^5$ is hydrogen or an alkyl having from 1 to 4 carbon atoms, where $R^3$ is an alkyl having from 1 to 10 carbon atoms, and wherein $R^4$ is hydrogen or an alkyl having from 1 to 10 carbon atoms, and wherein $R^4$ is hydrogen or an alkyl having from 1 to 10 carbon atoms, said difunctional crosslinking agent being a compound containing two olefinic groups or a diacrylate or a dimethacrylate ester of an aliphatic diol

wherein said ester portion contains from 1 to 10 carbon atoms and wherein said diol portion contains from 2 to 8 carbon atoms, and wherein the amount of said crosslinking agent when utilized is from about 0.05 percent to about 10 percent by weight based upon the total weight of all acrylic polymeric microemulsion forming monomers.

2. An aqueous acrylic polymeric microemulsion according to Claim 1, wherein $R^1$ is hydrogen, wherein $R^2$ is an alkyl having from 4 to 12 carbon atoms, wherein the amount of said one or more acrylate monomers is from about 60 percent to about 99 percent by weight, wherein the amount of said at least one olefinically carboxylic acid monomer is from about 2 percent to about 6 percent by weight, wherein $R^3$ is an alkyl having from 1 to 4 carbon atoms, wherein $R^4$ is hydrogen or an alkyl having from 1 to 4 carbon atoms, and wherein the amount of said crosslinking agent is from about 0.1 percent to about 5 percent by weight.

3. An aqueous acrylic polymeric microemulsion according to Claim 2, wherein said one or more acrylate monomers is n-butyl acrylate, 2-ethyl-hexyl acrylate, ethylacrylate, or combinations thereof, wherein said at least one olefinically unsaturated carboxylic acid monomer is acrylic acid, methacrylic acid, itaconic acid, maleic acid, fumaric acid, or combinations thereof, and wherein said at least one crosslinking agent is n-methyloacrylamide, divinyl benzene, or combinations thereof.

4. An aqueous acrylic polymeric microemulsion according to Claim 1, wherein the amount of said at least one olefinically unsaturated carboxylic acid monomer is from about 3 percent to about 5 percent by weight and wherein the amount of said one or more crosslinking agents is from about 0.1 percent to about 1.0 percent by weight.

5. A paper article, comprising:
effective amount of acrylic polymeric microemulsion particles having an average particle size of 600 Angstroms or less to provide improved beater addition tensile strength.

6. A paper article according to claim 5, wherein said acrylic polymeric microemulsion contains from about 1 to about 25 parts by weight of at least one emulsifier from very 100 parts by weight of said acrylic polymeric microemulsion particle forming monomers, and wherein said acrylic particles are made from:

1) one or more acrylate monomers having the formula

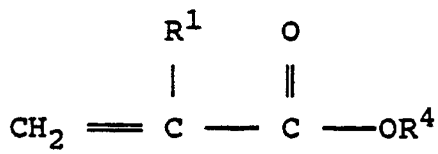

wherein $R^1$ is hydrogen or an alkyl having from 1 to 4 carbon atoms, wherein $R^2$ is an aliphatic having from 2 to 20 carbon atoms, wherein the amount of said 1 or more acrylate monomers is from about 30 percent to about 100 percent by weight based upon the total weight of all acrylic polymeric microemulsion forming monomers,

2) optionally one or more other suitable copolymerizable vinyl monomer such as vinyl chloride, styrene, vinylidene chloride, vinyl acetate, acrylonitrile, and the like, copolymerized to produce a Tg of 20°C or lower,

3) optionally at least one olefinically unsaturated carboxylic acid monomer containing at least one carbon-carbon double bond susceptible to polymerization and at least one carboxyl group, the amount of said olefinically unsaturated carboxylic acid monomer when utilized being 0.2 percent to about 15 percent by weight based upon the total weight of all acrylic polymeric microemulsion forming monomers, and

4) at least one optional monofunctional or difunctional crosslinking agent, said monofunctional crosslinking agent having the formula

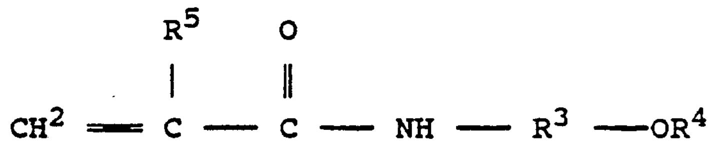

where $R^5$ is hydrogen or an alkyl having from 1 to 4 carbon atoms, wherein $R^3$ is an alkyl having from 1 to 10 carbon atoms, and wherein $R^4$ is hydrogen or an alkyl having from 1 to 10 carbon atoms, said difunctional crosslinking agent being a compound containing two olefinic groups or a diacrylate or a dimethacrylate ester of an aliphatic diol wherein said ester portion contains from 1 to 10 carbon atoms and

wherein said diol portion contains from 2 to 8 carbon atoms.

7. A process for producing an aqueous polymeric microemulsion, comprising the steps of:
preparing an aqueous solution containing at least one water soluble initiator and an effective amount of one or more emulsifying agents in the presence of said at least one water soluble initiator or redox initiation system capable of producing an aqueous acrylic polymeric microemulsion;
incrementally adding one or more acrylic forming monomers to said aqueous solution containing said initiator or said redox initiation system and said emulsifying agents, said acrylic forming monomers being
1) one or more acrylate monomers having the formula

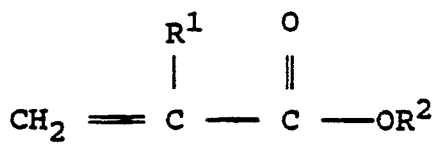

wherein $R^1$ is hydrogen or an alkyl having from 1 to 4 carbon atoms, wherein $R^2$ is an aliphatic having from 2 to 20 carbon atoms, wherein the amount of said 1 or more acrylate monomers is from about 30 percent to about 100 percent by weight based upon the total weight of all acrylic polymeric microemulsion forming monomers,
2) optionally one or more other suitable copolymerizable vinyl monomer such as vinyl chloride, styrene, vinylidene chloride, vinyl acetate, acrylonitrile, and the like, copolymerized to produce a Tg of 20° C or lower,
3) at least one olefinically unsaturated carboxylic acid monomer containing at least one carbon-carbon double bond susceptible to polymerization and at least one carboxyl group, the amount of said olefinically unsaturated carboxylic acid monomer when utilized being 0.2 percent to about 15 percent by weight based upon the total weight of all acrylic polymeric microemulsion forming monomers, and
4) at least one optional monofunctional or difunctional crosslinking agent, said monofunctional crosslinking agent having the formula

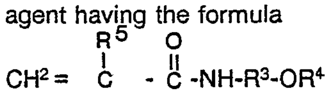

where $R^5$ is hydrogen or an alkyl having from 1 to 4 carbon atoms, wherein $R^3$ is an alkyl having from 1 to 10 carbon atoms, and wherein $R^4$ is hydrogen or an alkyl having from 1 to 10 carbon atoms, said difunctional crosslinking agent being a compound containing two olefinic groups or a diacrylate or a dimethacrylate ester of an aliphatic diol wherein said ester portion contains from 1 to 10 carbon atoms and wherein said diol portion contains from 2 to 8 carbon atoms, and wherein the amount of said crosslinking agent when utilized is from about 0.05 percent to about 10 percent by weight based upon the total weight of all acrylic polymeric microemulsion forming monomers; and
polymerizing said acrylic polymeric microemulsion forming monomers and forming a coagulation stable acrylic polymeric microemulsion having a number average medium particle size of 600 Å or less.

8. A process according to Claim 7, wherein $R^1$ is hydrogen, wherein $R^2$ is an alkyl having from 4 to 12 carbon atoms, wherein the amount of said one or more acrylate monomers is from about 60 percent to about 99 percent by weight, wherein the amount of said at least one olefinically carboxylic acid monomer is from about 2 percent to about 6 percent by weight, wherein $R^3$ is an alkyl having from 1 to 4 carbon atoms, wherein $R^4$ is hydrogen or an alkyl having from 1 to 4 carbon atoms, wherein the amount of said crosslinking agent is from about 0.1 percent to about 5 percent by weight, wherein the amount of said one or more emulsifying agents is from about 1.0 to about 15 parts by weight, and wherein the amount of said at least one water soluble initiator is from about 0.01 parts to about 3.0 parts by weight for every 100 parts by weight of said acrylic-forming monomers.